# EUROPÄISCHE PATENTSCHRIFT

(11) **EP 3 066 618 B1**
(45) Veröffentlichungstag und Bekanntmachung des Hinweises auf die Patenterteilung: **10.01.2018**
(21) Anmeldenummer: 14793020.0
(22) Anmeldetag: 03.11.2014
(51) Int. Cl.: G06K 19/077, G06K 19/07

(54) **IC-MODUL FÜR UNTERSCHIEDLICHE VERBINDUNGSTECHNIKEN**
IC MODULE FOR DIFFERENT CONNECTION TECHNOLOGIES
MODULE DE CIRCUITS INTÉGRÉS POUR DIFFÉRENTES TECHNIQUES DE CONNEXION

(30) Priorität: 04.11.2013 DE 102013018518
(43) Veröffentlichungstag der Anmeldung: 14.09.2016
(73) Patentinhaber: Giesecke+Devrient Mobile Security GmbH, 81677 München (DE)
(72) Erfinder: OJSTER, Albert, 82031 Grünwald (DE)
(86) Internationale Anmeldenummer: PCT/EP2014/002938
(87) Internationale Veröffentlichungsnummer: WO 2015/062742

(56) Entgegenhaltungen:
- EP-B1- 1 567 979
- EP-B1- 1 654 694
- WO-A1-98/08191
- WO-A2-99/05643
- DE-A1-102012 013 920

## Beschreibung

Die Erfindung richtet sich auf ein zum Einbau in einen tragbaren Datenträger geeignetes IC-Modul, das mit einem in dem Datenträger vorhandenen elektronischen Bauelement verbunden wird. Insbesondere richtet sich die Erfindung auf ein IC-Modul zum Einbau in eine Chipkarte, in der eine Antennenspule ausgebildet ist.

Aus der EP 1 567 979 B1 ist ein IC-Modul bekannt, das in einen Kartenkörper einer Chipkarte eingesetzt und beim Einsetzen mit einer in dem Kartenkörper angelegten Antenne verbunden wird. In dem Kartenkörper befindet sich dazu eine Ausnehmung, in der Kontaktierungsanschlüsse der Antenne enden. Das Modul besitzt zu den Antennenanschlüssen korrespondierende Modulanschlüsse. Auf die Antennen- oder die Modulanschlüsse wird ein elastisches, leitfähiges Klebmaterial in der Form eines Zapfens aufgebracht. Das Modul wird anschließend unter Druck in die Ausnehmung eingesetzt, so dass die Leitklebstoffzapfen zu Fladen verformt werden. Es entsteht auf diese Weise, ohne dass weitere Maßnahmen erforderlich sind, eine elektrische Druck-Form-Verbindung zwischen den Modulanschlüssen und den Antennenanschlüssen.

Praktisch hat es sich als zweckmäßig erwiesen, die modulseitigen Kontaktierungsflächen in Form eines Gittermusters zu gestalten mit Freiflächen, die von Leitungsbahnen eingerahmt sind. Die Freiflächen bestehen aus nicht leitendem Modulmaterial und unterstützen die Klebeverbindung. Derartige Kontaktierungsflächen in Gittermusterform eignen sich naturgemäß nur bedingt für die Herstellung von üblichen Lötverbindungen zum Anschluss von Drähten. Mit derartigen Kontaktierungsflächen versehene Module sind deshalb auf eine bestimmte Verbindungstechnik beschränkt.

Aus der EP 1 654 694 B1 ist weiterhin ein zum Einbau in eine Chipkarte vorgesehenes IC-Modul bekannt, das über zwei Paare von Modulanschlüssen verfügt. Ein Paar dient dabei zum Anschluss einer in der Karte vorbereiteten Antenne, das andere zum Anschluss eines in der Karte vorbereiteten Schalters. Das Modul basiert auf einem sogenannten Leadframe, d.h. auf einem ursprünglich zusammenhängenden großen Kontaktfeld, das durch Ausnehmungen in eine Mehrzahl von Elementen unterteilt wurde. Vier dieser Elemente bilden die beiden Paare Modulanschlüsse. Die elektrische Verbindung mit den kartenseitigen Bauelementeanschlüssen erfolgt entsprechend mittels derselben Verbindungstechnik, d.h. - bei Leadframes - durch Löten.

Aufgabe der Erfindung ist es, ein für Druck-Form-Verbindungen eingerichtetes Modul so zu verbessern, dass es auch für Lötverbindungen geeignet ist.

Diese Aufgabe wird gelöst durch ein Modul mit den Merkmalen des Hauptanspruchs. Das erfindungsgemäße Modul hat den Vorteil, dass es bei geringem Mehraufwand eine zuverlässige Kontaktsicherheit auch für Lötverbindungen mittels Drähten gewährleitet. Erreicht wird dies, indem neben den für die Druck-Form-Verbindung optimierten Kontaktfeldern jeweils ein zusätzliches Kontaktfeld vorgesehen wird, das insbesondere Lötanschlüsse ermöglicht. Besonders bevorzugt sind die beiden verschiedenen Typen Kontaktierungsfelder unmittelbar verbunden als Einheit ausgeführt. Die erfindungsgemäße Bereitstellung des zusätzlichen Kontaktfeldes hat den Vorteil, dass sie einfach realisierbar ist. Durch das mit zwei Sätzen von Kontaktierungsfeldern versehene Modul wird es möglich, das Modul für unterschiedlich aufgebaute Datenträger einzusetzen. Indem nicht mehr für jeden Datenträgertyp ein eigenes Modul bereitgestellt werden muss, sinken insgesamt die Herstellungskosten. Zudem vereinfacht sich die Herstellung. Darüberhinaus haben die zusätzlichen Kontaktfelder den Vorteil, dass sie durch die Ausweitung der Verbindungsfläche die Verbindungssicherheit erhöhen, unabhängig davon, welche Verbindungstechnik genutzt wird.

Unter Bezugnahme auf die Zeichnung wird nachfolgend ein Ausführungsbeispiel der Erfindung näher beschrieben. Es zeigen:
- Fig. 1: eine perspektivische Schrägaufsicht auf ein Modul vor dem Einbau in einen Datenträger mittels einer ersten Verbindungstechnik,
- Fig. 2: eine Ansicht der Unterseite eines Moduls,
- Fig. 3: eine perspektivische Schrägaufsicht auf ein Modul vor dem Einbau in einen Datenträger unter Nutzung einer zweiten Verbindungstechnik,
- Fig. 4: eine Gestaltung von Kontaktierungsfeldern für verschiedene Verbindungstechniken in einer gemeinsamen Struktur,
- Fig. 5: eine Gestaltungsvariante von Kontaktierungsfeldern für verschiedene Verbindungstechniken in einer gemeinsamen Struktur,
- Fig. 6: eine weitere Gestaltungsvariante von Kontaktierungsfeldern für verschiedene Verbindungstechniken in einer gemeinsamen Struktur, und
- Fig. 7: eine perspektivische Schrägaufsicht auf ein Modul vor dem Einbau in einen Datenträger unter Nutzung einer Gestaltungsvariante für die Kontaktierungsfelder.

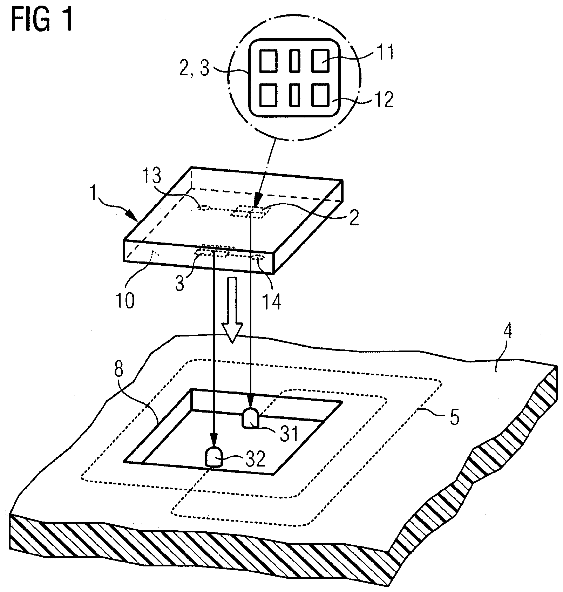

Fig. 1 zeigt ein an sich bekanntes IC-Modul 1, das an seiner Unterseite 10 Kontaktierungselemente aufweist in Form zweier Paare Kontaktierungsfelder 2, 3, 13, 14. Die Kontaktierungsfelder 2,3,13,14 dienen zur Herstellung einer elektrischen Verbindung mit einem in einem Datenträger 4 ausgebildeten elektronischen Bauelement 5. Alle gezeigten Dimensionen, auch in den anderen Figuren, sind nicht maßstabsgerecht und dienen nur zur Veranschaulichung der beschriebenen Prinzipien.

Die Kontaktierungsfelder 2,3 sind für Verbindungen in Druck-Form-Technik optimiert. Sie sind hierzu, wie in der Vergrößerung angedeutet, als strukturierte Kontaktierungsfelder ausgeführt. D.h. sie besitzen z.B. eine Struktur in Form eines Kreuzgittermusters mit Freiflächen 11, die von einem Leitungsbahnrahmen 12 eingefasst sind. Die Freiflächen 11 sind zweckmäßig von dem nichtleitenden Grundmaterial des Modulkörpers gebildet. Sie springen gegen den erhabenen Leitungsbahnrahmen etwas zurück, typischerweise um wenige µm, und bewirken durch die minimale Reliefierung die Ausbildung einer großen Kontaktfläche, über die Ladung fließen kann. Zudem gehen sie gute Klebverbindungen zu Gegenkontaktierungselementen ein, die einen Klebstoff enthalten. Alternativ können die Freiflächen 11 selbst als erhabene Struktur auf dem Leitmaterial aufgebaut sein, das den Leiterbahnrahmen 12 bildet.

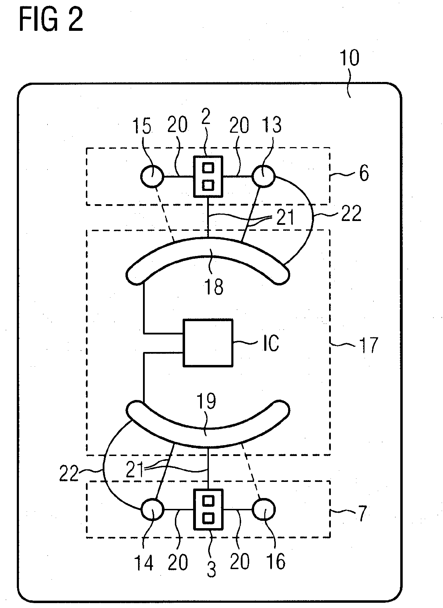

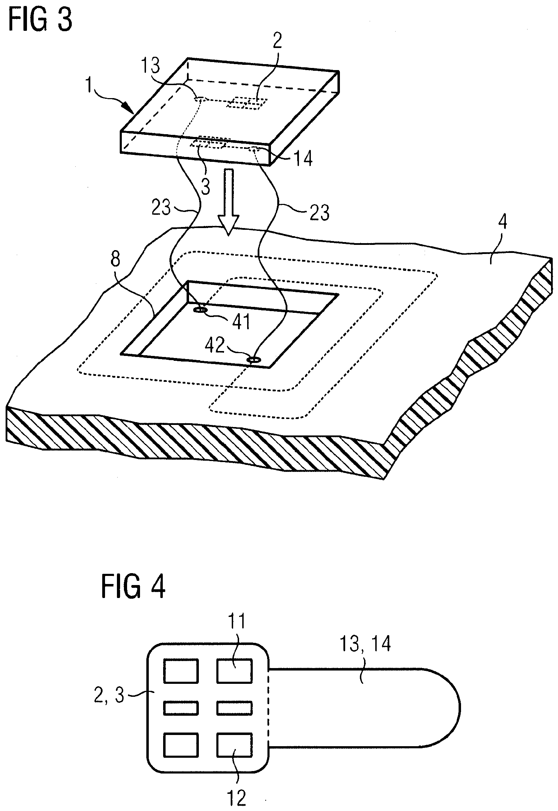

Die Kontaktierungsfelder 13,14 sind für löttechnische Verbindungen mittels Drähten optimiert; sie werden nachfolgend anhand der Fig. 2, 3 erläutert.

Zweckmäßig werden die nachfolgend Module genannten IC-Module 1 in einem kunststoffbeschichteten Trägerband bereitgestellt. Die Ausbildung der Kontaktierungsfelder 2, 3 sowie aller weiteren Leiterbahnelemente erfolgt zweckmäßig ätztechnisch.

Der Datenträger 4 ist beispielsweise eine Karte mit Normabmessungen gemäß der ISO 7816. Andere Größen oder andere Bauformen mit völlig anderen Geometrien sind aber ebenso möglich. Der Datenträger 4 besitzt eine Ausnehmung 8, die auf die Bauform des Moduls 1 abgestimmt ist. Sie ist in der Regel so gestaltet, dass die Oberseite 9 des Moduls 1 im eingesetzten Zustand einen Teil der Oberfläche des Datenträgers 4 bildet. In einer Ausführungsform kann das Modul 1 an seiner Oberseite 9 ein galvanisches Kontaktfeld tragen.

In dem Datenträger 4 ist ein elektronisches Bauelement 5 ausgebildet. Das Bauelement 5 kann, wie in Fig. 1 angedeutet, z.B. eine Antenne sein. Andere Bauelemente sind ebenfalls möglich, beispielsweise ein Schalter oder ein Sensor. Das Bauelement 5 besitzt Gegenkontaktierungselemente, die in der Ausnehmung 8 enden. Die Gegenkontaktierungselemente korrespondieren zu den modulseitigen Kontaktierungsfeldern 2,3 und dienen zur Verbindung des Bauelements 5 mit dem Modul 1.

Im Beispiel der Figur 1 haben die Gegenkontaktierungselemente die Form von kompressiblen Leitmaterialhöckern 31, 32. Zweckmäßig ist das Material der Leitmaterialhöcker 31, 32 leicht elastisch unter erzeugt nach einer Verformung einen ständigen Gegendruck. Vorteilhaft wirkt es zudem zugleich als Klebstoff. Die Leitmaterialhöcker 31, 32 sind abgestimmt auf die strukturierten modulseitigen Kontaktierungsfelder 2,3. Sie haben z.B. die Gestalt von Pyramiden, Kegelspitzen, Halbkugeln, Zylindern oder ähnlichen Haufenformen.

Beim Einbau des Moduls 1 kommen die modulseitigen strukturierten Kontaktierungsfelder 2, 3 auf den kompressiblen Leitmaterialhöckern31, 32 in der Ausnehmung 8 zu liegen und drücken diese zusammen. Die Leitmaterialhöcker31, 32 verformen sich dabei fladenartig. Sie vergrößern dadurch die an den Kontaktierungsfeldern 2, 3 anliegende Verbindungsfläche, die zu einer großen Leitverbindungsfläche wird. Es entsteht eine entsprechend gut leitende elektrische Verbindung zwischen Modul 1 und elektronischem Bauelement 5. Wirkt das Material der Leitmaterialhöcker 31, 32 zugleich klebend, ist die Verbindung zudem sehr fest.

Fig. 2 zeigt eine Aufsicht auf die Unterseite 10 eines Moduls 1. An der Unterseite 10 ausgebildet sind Kontaktierungselemente in Form zwei Kontaktierungsfelderblöcke 6, 7, die aus jeweils mindestens zwei verschieden gestalteten Kontaktierungsfeldern bestehen. Ein erster Satz Kontaktierungsfelder ist in Form eines Paares von strukturierten Kontaktierungsfeldern 2, 3 ausgeführt, wie sie anhand der Fig. 1 erläutert wurden. Ein zweiter Satz Kontaktierungsfelder 13,14 besitzt die Form von Lötflächen. Die Lötflächen 13,14 sind vergrößerte Leiterbahnbereiche und besitzen ungefähr die gleiche Größe wie die strukturierten Kontaktierungsfelder 2, 3. Über Leiterbahnelemente 20 sind die Lötflächen 13,14 jeweils mit den strukturierten Kontaktierungsfeldern 2, 3 verbunden.

In einer in Fig. 4 dargestellten Variante sind Lötflächen 13, 14 und strukturierten Kontaktierungsfelder 2, 3 als gemeinsame Struktur ausgebildet, die verschiedenen Kontaktierungsfelder übergangslos miteinander verbunden. Leiterbahnelemente 20 entfallen hier. In dem Beispiel sind die Lötflächen 13, 14 jeweils als zapfenartige Verlängerung aus einer Seite der strukturierten Kontaktierungsfeldern 2, 3 herausgebildet. Die Längserstreckung der zapfenartigen Verlängerungen, d.h. der Lötflächen 13,14, entspricht dabei ungefähr der Breite der strukturierten Kontaktierungsfelder 2, 3. Andere Geometrien sind selbstverständlich möglich.

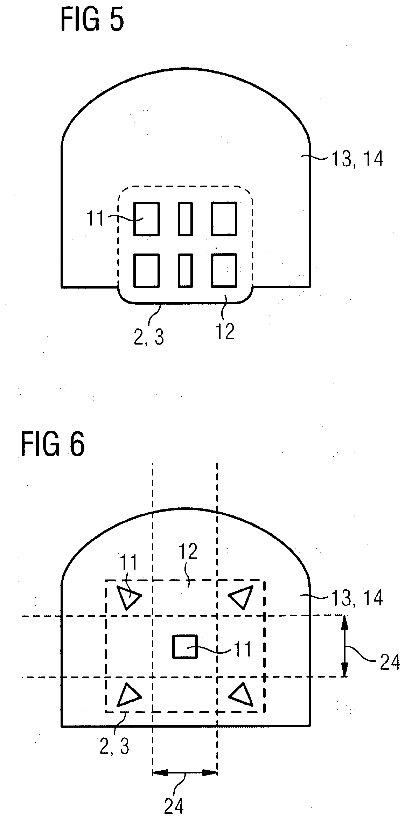

In der in Fig. 5 dargestellten Variante sind die Lötflächen 13,14 ebenfalls als gemeinsame Struktur mit den strukturierten Kontaktierungsfeldern 2,3 ausgebildet. Die Lötflächen 13,14 umschließen die strukturierten Kontaktierungsfelder 2, 3 jedoch an drei Seiten hufeisenförmig. Die radiale Ausdehnung des Kontaktierungsfelder -Hufeisens entspricht ungefähr der Breite der strukturierten Kontaktierungsfelder 2, 3.

In der in Fig. 6 dargestellten Variante bilden die Lötflächen 13,14 ebenfalls eine gemeinsame Struktur mit den strukturierten Kontaktierungsfeldern 2, 3. Die Lötflächen 13,14 umschließen hier die strukturierten Kontaktierungsfelder 2, 3 vollständig und bilden einen Lötflächenring 13,14.

Die Freiflächen 11 der strukturierten Kontaktierungsfelder 2, 3 umfassen jeweils eine zentrale Freifläche 11, die im Schnittpunkt zweier, zweckmäßig orthogonaler, Achsen 24 durch das Kontaktierungsfeld 2, 3 liegt, sowie weitere, äußere Freiflächen 11, die außerhalb der Achsen 24 liegen. Die Achsen 24 haben die Form von flächigen Streifen, die einen Mindestabstand zwischen zwei gegenüberliegenden äußeren Freiflächen 11 bestimmen. Die Breite der Streifen bzw. der Achsen 24 ist zweckmäßig auf solche Drahtleiter oder Verbindungsaufgaben abgestimmt, die typischerweise in Verbindung mit dem Modul 1 genutzt werden. Sie ist vorzugsweise so dimensioniert, dass die Achse 24 zum Beispiel einen über das Kontaktierungsfeld 2, 3 verlegten Drahtleiter vollständig aufnehmen kann, der dann über der zentralen Freifläche 11 Kontakt auf dem Grundmaterial des Moduls 1 aufliegt und im übrigen Verlauf der Achse 24 durchweg auf den Kontaktierungsfeldern 2, 3. In dem Auflagebereich können dann die strukturierten Kontaktierungsfelder 2,3 ebenfalls als Lötfläche fungieren und der Drahtleiter durch Löten mit dem Kontaktierungsfeld 2,3 verbunden werden. Die Anordnung der Freiflächen 11 kann, wie in Fig. 6 angedeutet, beispielsweise nach Art der Fünf auf einem Würfel erfolgen. Die radiale Ausdehnung des Lötflächen-Ringes 13,14 kann kleiner sein als die Breite der strukturierten Kontaktierungsflächen 2, 3, da der durch die Achsen 24 gebildete Streifen bis zu der zentralen Freifläche 11 jeweils ebenfalls als Lötfläche nutzbar ist.

Die Geometrien des Lötflächen-Ringes 13,14 und der Freiflächen 11 sind in einem weiten Rahmen gestaltbar. Beispielsweise kann der Lötfächen-Ring 13,14, wie in Fig. 6 angedeutet, einzelne gerade Seitenkanten aufweisen oder gänzlich als Rechteckring ausgeführt sein. Die äußeren Freiflächen 11 können beispielsweise als Dreiecke oder in Nierenform gestaltet sein.

In der in Fig. 2 gezeigten Ausführungsvariante weisen die Kontaktierungsfelderblöcke 6, 7 jeweils noch ein weiteres Kontaktierungsfeld 15,16 auf, das ebenfalls die Form eine Lötfläche besitzt. Die weiteren Lötflächen 15,16 sind spiegelbildlich zu dem ersten Paar Lötflächen 13,14 ausgebildet. Sie besitzen zweckmäßig die gleiche oder eine ähnliche Geometrie wie das erste Paar Lötflächen 13,14 und sind wie diese über Leiterbahnelemente 20 mit den strukturierten Kontaktierungsfeldern 2, 3 verbunden.

Es ist möglich eine noch größere Zahl von Lötflächen um die strukturierten Kontaktierungsfelder 2, 3 herum vorzusehen. Anordnung und Anzahl der Lötflächen 13,14,15,16 müssen dabei nicht symmetrisch auf die strukturierten Kontaktierungsfelder 2, 3 verteilt sein. Auch kann die Form der Lötflächen 13,14,15,16 in einem weiten Rahmen variiert werden. Neben punktund achsensymmetrischen Geometrien kommen insbesondere Freiformen in Betracht. Wo möglich können die Lötflächen 13,14,15,16 dabei stets übergangslos aus den Kontaktierungsfelder 2, 3 herausgeformt sein.

Desweiteren ist an der Unterseite 10 ein Zwischenleitungssystem 17 ausgebildet, das dazu dient die Kontaktierungsfelder 2, 3, 13, 14, 15, 16 an den IC des Moduls 1 anzubinden. Dass Zwischenleitungssystem 17 besteht aus einem Paar Sammelschienen 18,19, von denen sich jeweils Leitungspfade zu den Kontaktierungsfeldern 2, 3, 13, 14, 15, 16 erstrecken. Die Anbindung erfolgt an den IC erfolgt z.B. über Bonddrähte. Das Layout des Zwischenleitungssystems 17 kann, wie in Fig. 2 angedeutet, auf einer Kreisgeometrie basieren und halbkreisartige Sammelschienen 18,19 besitzen; beliebige andere Geometrien sind selbstverständlich ebenfalls möglich.

Vorzugsweise sind die Kontaktierungsfelder 2, 3, 13, 14, 15, 16 jeweils über zumindest zwei Leitungspfade mit dem Zwischenleitungssystem 17 verbunden. In der Regel sind zumindest die strukturierten Kontaktierungsfelder 2, 3 zum einen über Leiterbahnelemente 21 auf einer geometrisch direkten Linie und zum anderen über einen zusätzlichen redundanten Leitungspfad 22 mit dem Zwischenleitungssystem 17 verbunden. Die redundanten Leitungspfade 22 vergrößern die Kontaktierungssicherheit, unabhängig davon, ob die strukturierten Kontaktierungsfelder 2, 3 oder die Lötflächen 13,14,15,16 genutzt werden. Zweckmäßig ist jedes der Kontaktierungsfelder 2,3,13,14, 15,16 direkt über einen Leitungspfad mit dem Zwischenleitungssystem 17 verbunden.

In einer Variante zu der in Figur 2 angedeuteten Kontaktierungsfelderanordnung liegen die strukturierten Kontaktierungsfelder 2, 3 und die Lötflächen 13,14,15,16 nicht in einer Reihe nebeneinander sondern sind auf gegenüberliegenden Seiten der Sammelschienen des Zwischenleitungssystems 17 angeordnet.

Das vorbeschriebene Modul 1 gestattet die Herstellung einer elektrisch leitenden Verbindung zu Gegenkontaktierungselementen unter Verwendung verschiedener Verbindungstechniken: zum einen kann eine elektrische Verbindung mittels einer Druck-Form-Technik hergestellt werden, zum anderen löttechnisch durch Einsatz von Verbindungsdrähten 23. Das Modul 1 kann damit sowohl in Datenträgern 4 eingesetzt werden, deren Gegenkontaktierungselemente die Form von kompressiblen Leitmaterialhöckern haben, als auch in Datenträgern 4, in denen die Gegenkontaktierungselemente die Form von Lötanschlussflächen haben. Beim Einbau in ein Modul 1 wird dabei jeweils nur ein Satz Kontaktierungsfelder genutzt, also z.B. nur die strukturierten Kontaktierungsfelder 2, 3 oder nur ein Paar von Lötflächen 13,14, 15,16. Der jeweils andere Satz Kontaktierungsfelder bleibt unbenutzt.

Fig. 3 veranschaulicht einen Einbau eines Moduls 1 in einen Datenträger, bei dem nicht die strukturierten Kontaktierungsfelder 2, 3 für die Ausbildung einer elektrischen Verbindung genutzt werden, sondern die als Lötflächen ausgebildeten Kontaktierungsfelder 13,14.

Das elektronische Bauelement 5 ist wiederum eine Antennenspule. Deren Gegenkontaktierungselemente der sind jetzt als plane Drahtanschlußflächen 41, 42 ausgeführt, die offenliegend in der Ausnehmung 8 angeordnet sind. Die Verbindung zwischen Modul 1 und Antenne 5 erfolgt mit Hilfe von Verbindungsdrähte 23, die jeweils an einer Lötfläche 13,14 und an korrespondierenden Drahtanschlußflächen 41, 42 angelötet werden. Das Herstellen der elektrischen Verbindung zwischen Modul 1 und Datenträger 4 erfolgt in dieser Konstellation zweckmäßig, bevor der eigentliche Moduleinbau geschieht. Die Ausnehmung 8 ist dazu so bemessen und so gestaltet, dass die Verbindungsdrähte 23 darin unter dem eingebauten Modul 1 Platz finden. In einer Variante ist die Antenne 5 in Form einer Drahtspule ausgebildet. In diesem Fall können die Drahtanschlußflächen 41, 42 entfallen. Stattdessen werden die Enden der Antenne 5 offengelassen und bilden unmittelbar die Verbindungsdrähte 23.

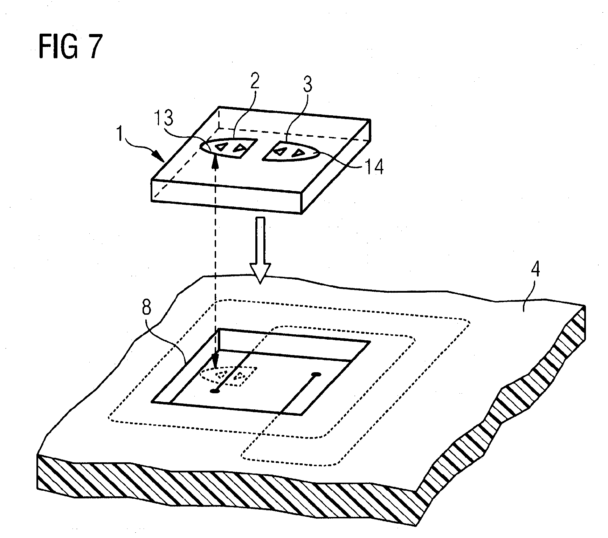

Fig. 7 veranschaulicht einen Einbau eines Moduls 1 in einen Datenträger, bei dem die Lötflächen 13,14 eine gemeinsame Struktur mit den strukturierten Kontaktierungsfeldern 2, 3 bilden, wie sie in Fig. 6 veranschaulicht ist. Die Lötflächen 13,14 umschließen die strukturierten Kontaktierungsfelder 2, 3 vollständig und bilden einen Lötflächenring 13,14, wobei zwischen den Freiflächen 11 der strukturierten Kontaktierungsfelder 2, 3 Achsen 24 ausgebildet sind, die zusätzlich als Lötfläche verwendet werden können; die Gestaltung der Freiflächen 11 und der strukturierten Kontaktierungsfelder 2, 3 ist vereinfacht angedeutet.

Das elektronische Bauelement 5 ist wiederum eine Antennenspule. Die Gegenkontaktierungselemente sind jetzt einfach als Drahtenden ausgeführt, die offenliegend in der Ausnehmung 8 angeordnet sind und die Verbindungsdrähte 23 bilden. Die Verbindung zwischen Modul 1 und Antenne 5 erfolgt, indem die Drahtenden direkt mit dem Modul 1 verbunden werden, d.h. jeweils an einer Lötfläche 13,14 angelötet werden. In der Ausnehmung 8 ist das Zusammentreffen einer Lötfläche mit einem Drahtende veranschaulicht. Die Drahtenden der Antennenspulen treffen in diesem Ausführungsbeispiel längs auf die Lötflächen 13,14.

Unter Beibehaltung des grundlegenden Gedankens, ein IC-Modul mit mehreren Sätzen von Kontaktierungsfeldern für unterschiedliche Verbindungstechniken zu versehen, gestattet die erfindungsgemäße Lösung eine Reihe von weiteren Ausgestaltungen und Varianten, auf die hier nicht im einzelnen eingegangen wird. Anstelle der beschriebenen Verbindungstechniken, also der Druck-Form-Technik und der Draht-Löttechnik, können durch weitere, entsprechend angepasste Kontaktierungsfelder andere oder weitere Verbindungstechniken ermöglicht werden. Beispielsweise kann zusätzlich oder alternativ zu einer der genannten Verbindungstechniken eine Verbindung vorgesehen, die eine externe Anregung, z.B. durch IR-Strahlung erfordert. Entsprechende Kontaktierungsfelder können dann z.B. mit einem aktivierbarem Material belegt sein. In einem weiten Rahmen gestaltbar ist ferner das Layout für die Kontaktierungsfelder 2, 3, 13, 14, 15, 16 das Zwischenleitungssystem 17 und die Leitungspfade. Grundsätzlich kann ferner das Zwischenleitungssystem 17 auch entfallen. Die Kontaktierungsfelderblöcke 6, 7 sind dann direkt mit dem IC des Moduls 1 verbunden.

### Bezugszeichenliste

- 1.: IC-Modul
- 2.: Strukturiertes Kontaktierungsfeld
- 3.: Strukturiertes Kontaktierungsfeld
- 4.: Datenträger
- 5.: elektronisches Bauelement (Antenne)
- 6.: Kontaktierungsfelderblock
- 7.: Kontaktierungsfelderblock
- 8.: Ausnehmung
- 9.: Modul-Oberseite
- 10.: Modul-Unterseite
- 11.: Freiflächen
- 12.: Leitungsbahnrahmen
- 13.: Kontaktierungsfeld (Lötfläche)
- 14.: Kontaktierungsfeld (Lötfläche)
- 15.: Kontaktierungsfeld (Lötfläche)
- 16.: Kontaktierungsfeld (Lötfläche)
- 17.: Zwischenleitungssystem
- 18.: Sammelschiene
- 19.: Sammelschiene
- 20.: Leiterbahnelement
- 21.: Leiterbahnelement
- 22.: Redundanter Leitungspfad
- 23.: Verbindungsdrähte
- 24.: Achse (Streifen)
- 31.: Leitmaterialhöcker
- 32.: Leitmaterialhöcker
- 41.: Drahtanschlussfläche
- 42.: Drahtanschlussfläche

## Patentansprüche

1. IC-Modul zum Einbau in einen tragbaren Datenträger (4) mit einer Oberseite (9), die im eingebauten Zustand einen Teil der Oberfläche des Datenträgers (4) bildet, und Kontaktierungselementen zur Herstellung einer elektrischen Verbindung zu Gegenkontaktierungselementen, die offenliegend in einer Ausnehmung (8) in dem Datenträger (4) ausgebildet sind, **dadurch gekennzeichnet, dass** die Kontaktierungselemente mindestens einen ersten Satz Kontaktierungsfelder (2, 3) für eine erste Verbindungstechnik und mindestens einen zweiten Satz Kontaktierungsfelder (13,14) für eine zweite Verbindungstechnik aufweisen, wobei jeweils ein Kontaktierungsfeld des ersten Satzes Kontaktierungsfelder (2,3) mit einem Kontaktierungsfeld des zweiten Satzes Kontaktierungsfelder (13,14) elektrisch leitend verbunden ist.

2. Modul nach Anspruch 1, **dadurch gekennzeichnet, dass** die Kontaktierungsfelder des ersten Satzes Kontaktierungsfelder strukturierte Kontaktierungsfelder (2,3) sind und ein Muster bilden mit Freiflächen (11), die von einem Rahmen aus Leitungsbahnen (12) eingerahmt sind, um elektrische Verbindungen zu Gegenkontaktierungselementen zu unterstützen, die in Form von Leitmaterialhöckern (31, 32) bereitgestellt werden.

3. Modul noch Anspruch 1, **dadurch gekennzeichnet, dass** die Kontaktierungsfelder des zweiten Satzes Kontaktierungsfelder Lötflächen (13,14,15,16) sind, um elektrische Verbindungen mithilfe von Verbindungsdrähten (23) zu ermöglichen, die einerseits mit den Lötflächen (13,14,15,16) verbunden werden und andererseits mit Gegenkontaktierungselementen.

4. Modul nach Anspruch 1, **dadurch gekennzeichnet, dass** die die Kontaktierungsfelder (13,14,15,16) des zweiten Satzes Kontaktierungsfelder übergangslos mit den Kontaktierungsfeldern (2, 3) des ersten Satzes Kontaktierungsfelder verbunden sind.

5. Modul nach einem der vorhergehenden Ansprüche, **dadurch gekennzeichnet, dass** die Kontaktierungsfelder (13,14) des zweiten Satzes Kontaktierungsfelder jeweils in Form eines geschlossenen oder offenen Ringes um den ersten Satz Kontaktierungsfelder herum ausgebildet sind, der eine Einheit mit dem Leitungsbahnrahmen (12) bildet.

6. Modul nach einem der vorhergehenden Ansprüche, **dadurch gekennzeichnet, dass** eine Freifläche (11) des ersten Satzes Kontaktierungsfelder im Schnittpunkt zweier streifenförmiger Achsen (24) angeordnet ist, und alle weiteren Freiflächen (11) außerhalb der Achsen (24).

7. Modul nach einem der vorhergehenden Ansprüche, **dadurch gekennzeichnet, dass** die Gegenkontaktierungselemente als Drahtanschlussflächen (41,42) ausgebildet sind.

8. Modul nach einem der vorhergehenden Ansprüche, **dadurch gekennzeichnet, dass** es mindestens ein Zwischenleitungssystem (30) aufweist, das einerseits mit dem IC des Moduls (1) und andererseits mit mindestens einem Kontaktierungsfeld (2, 3,13,14,15,16) verbunden ist.

9. Verfahren zur Herstellung eines tragbaren Datenträgers mit einem IC und einem elektronischen Bauelement mit den Schritten:
- Bereitstellen eines IC-Moduls (1) gemäß einem der vorhergehenden Ansprüche,
- Bereitstellen eines tragbaren Datenträgers (4) mit einer zur Aufnahme des IC-Moduls vorbereiteten Ausnehmung (8) sowie mit einem in dem Datenträger ausgebildeten elektronischen Bauelement (5), das mit in der Ausnehmung (8) vorbereiteten Gegenkontaktierungselementen verbunden ist,
- Einsetzen des IC-Moduls (1) in die Ausnehmung (8) in dem Datenträger, **dadurch gekennzeichnet, dass**
- beim Einsetzen des IC-Moduls (1) einer der Sätze Kontaktierungsfelder mittels der zugehörigen Verbindungstechnik mit den vorbereiteten Gegenkontaktierungselementen verbunden wird.

10. Verwendung eines IC-Moduls gemäß einem der Ansprüche 1 bis 8 zur Herstellung eines tragbaren Datenträgers mit einem an der Oberfläche des Datenträgers ausgebildeten galvanischen Kontaktfeld sowie mit einer im Körper des Datenträgers ausgebildeten Antennenspule.

## Claims

1. An IC module for installation in a portable data carrier (4) having an upper side (9) which, in the installed state, forms a part of the surface of the data carrier (4), and contacting elements for establishing an electrical connection with mating contacting elements which are configured open in a recess (8) in the data carrier (4), **characterized in that** the contacting elements have at least a first set of contacting pads (2, 3) for a first connection technology and at least a second set of contacting pads (13,14) for a second connection technology, wherein a contacting pad of the first set of contacting pads (2, 3) in each case is electroconductively connected to a contacting pad of the second set of contacting pads (13,14).

2. The module according to claim 1, **characterized in that** the contacting pads of the first set of contacting pads are structured contacting pads (2, 3) and form a pattern with free areas (11) which are framed by a frame consisting of conducting tracks (12) to support electrical connections with mating contacting elements which are supplied in the form of conductive-material bumps (31, 32).

3. The module according to claim 1, **characterized in that** the contacting pads of the second set of contacting pads are solder areas (13,14,15,16) to enable electrical connections using connection wires (23) which are connected to the solder areas (13,14,15,16), on the one hand, and to mating contacting elements, on the other hand.

4. The module according to claim 1, **characterized in that** the contacting pads (13,14,15,16) of the second set of contacting pads are connected to the contacting pads (2, 3) of the first set of contacting pads without a transition.

5. The module according to any of the previous claims, **characterized in that** the contacting pads (13,14) of the second set of contacting pads are respectively configured in the form of a closed or open ring around the first set of contacting pads, which forms a unit with the conducting-track frame (12).

6. The module according to any of the previous claims, **characterized in that** a free area (11) of the first set of contacting pads is arranged at the intersection point of two strip-shaped axes (24), and all further free areas (11) outside the axes (24).

7. The module according to any of the previous claims, **characterized in that** the mating contacting elements are configured as wire terminal areas (41,42).

8. The module according to any of the previous claims, **characterized in that** it has at least one link system (30 [sic]) which is connected to the IC of the module (1), on the one hand, and to at least one contacting pad (2,3,13,14,15,16), on the other hand.

9. A method for manufacturing a portable data carrier having an IC and an electronic device having the steps of:
- supplying an IC module (1) according to any of the preceding claims,
- supplying a portable data carrier (4) having a recess (8) prepared for receiving the IC module and having an electronic device (5) formed in the data carrier and connected to mating contacting elements prepared in the recess (8),
- inserting the IC module (1) into the recess (8) in the data carrier, **characterized in that**
- upon insertion of the IC module (1) one of the sets of contacting pads is connected to the prepared mating contacting elements by means of the appurtenant connection technology.

10. Use of an IC module according to any of claims 1 to 8 for manufacturing a portable data carrier having a galvanic contact pad formed on the surface of the data carrier and having an antenna coil formed in the body of the data carrier.

## Revendications

1. Module CI à installer dans support de données (4) portable, ayant une face de dessus (9) qui, à l'état installé, constitue une partie de la surface du support de données (4), et des éléments de mise en contact destinés à établir une connexion électrique à des contre-éléments de mise en contact exposés à l'air libre dans un évidement (8) dans le support de données (4), **caractérisé en ce que** les éléments de mise en contact comportent au moins un premier jeu de champs de mise en contact (2, 3) destinés à une première technique de connexion, et au moins un deuxième jeu de champs de mise en contact (13, 14) destinés à une deuxième technique de connexion, cependant que respectivement un champ de mise en contact du premier jeu de champs de mise en contact (2, 3) est connecté de manière électroconductrice à un champ de mise en contact du deuxième jeu de champs de mise en contact (13, 14).

2. Module selon la revendication 1, **caractérisé en ce que** les champs de mise en contact du premier jeu de champs de mise en contact (2, 3) sont des champs structurés de mise en contact et constituent un motif qui présente des surfaces libres (11) encadrées par un cadre en lignes conductrices (12) afin d'assister des connexions électriques à des contre-éléments de mise en contact qui sont mis à disposition sous forme de protubérances de matériau conducteur (31, 32).

3. Module selon la revendication 1, **caractérisé en ce que** les champs de mise en contact du deuxième jeu de champs de mise en contact sont des surfaces de soudure (13, 14, 15, 16) afin de permettre des connexions électriques à l'aide de fils de connexion (23) connectés d'une part aux surfaces de soudure (13, 14, 15, 16) et d'autre part à des contre-éléments de mise en contact.

4. Module selon la revendication 1, **caractérisé en ce que** les champs de mise en contact (13, 14, 15, 16) du deuxième jeu de champs de mise en contact sont connectés sans transition avec les champs de mise en contact (2, 3) du premier jeu de champs de mise en contact.

5. Module selon une des revendications précédentes, **caractérisé en ce que** les champs de mise en contact (13, 14) du deuxième jeu de champs de mise en contact sont respectivement réalisés sous forme d'un anneau fermé ou ouvert autour du premier jeu de champs de mise en contact qui constitue une unité avec le cadre en lignes conductrices (12).

6. Module selon une des revendications précédentes, **caractérisé en ce qu'**une surface libre (11) du premier jeu de champs de mise en contact est agencé au point d'intersection de deux axes (24) en forme de rubans, et que toutes les autres surfaces libres (11) sont agencées en dehors des axes (24).

7. Module selon une des revendications précédentes, **caractérisé en ce que** les contre-éléments de mise en contact sont réalisés sous forme de surfaces de connexion par fil (41, 42).

8. Module selon une des revendications précédentes, **caractérisé en ce qu'**il comporte au moins un système de conduite intermédiaire (30) qui est est connecté d'une part au CI du module (1) et d'autre part à au moins un champ de mise en contact (2, 3,13, 14, 15, 16).

9. Procédé de fabrication d'un support de données portable comportant un CI et un composant électronique, comprenant les étapes :
- mise à disposition d'un module CI (1) selon une des revendications précédentes,
- mise à disposition d'un support de données portable (4) pourvu d'un évidement (8) préparé à la réception du module CI et pourvu d'un composant (5) électronique qui est réalisé dans le support de données et qui est connecté à des contre-éléments de mise en contact préparés dans l'évidement (8),
- insertion du module CI (1) dans l'évidement (8) dans le support de données, **caractérisé en ce que**
- lors de l'insertion module CI (1), un des jeux de champs de mise en contact est, au moyen de la technique de connexion correspondante, connecté aux contre-éléments de mise en contact préparés.

10. Utilisation d'un module CI selon une des revendications de 1 à 8 pour la fabrication d'un support de données portable comportant un champ de contact galvanique réalisé à la surface du support de données et une bobine d'antenne réalisée dans le corps du support de données.
